# EUROPEAN PATENT SPECIFICATION

(11) **EP 3 853 469 B1**
(45) Date of publication and mention of the grant of the patent: **30.04.2025**
(21) Application number: 19828846.6
(22) Date of filing: 19.09.2019
(51) Int. Cl.: F03B 13/10, F03B 13/26, F03B 17/06

(54) **WATER FLOW ENERGY EXTRACTION DEVICE**
WASSERFLUSSENERGIE-EXTRAKTIONSVORRICHTUNG
DISPOSITIF D'EXTRACTION D'ÉNERGIE DES FLUX D'EAU

(30) Priority: 20.09.2018 NL 2021669
(43) Date of publication of application: 28.07.2021
(73) Proprietor: Aquation B.V., 2512 BD Den Haag (NL)
(72) Inventor: AYLWIN, Elliot William, 2512 BD 'S-Gravenhage (NL)
(74) Representative: EP&C
(86) International application number: PCT/NL2019/050626
(87) International publication number: WO 2020/060407

(56) References cited:
- WO-A1-2006/059094
- WO-A1-2006/063833
- US-A- 1 025 929
- US-A- 1 461 502
- US-A- 4 843 249

## Description

The present invention relates to a water flow energy extraction device, in particular a water flow energy extraction device constructed to extract energy from a tidal flow. The invention further relates to a water flow energy extraction system, comprising one or more of these water flow energy extraction devices. The invention also relates to a method to extract energy from a water flow, for example a tidal flow.

Generally, there is an increasing need to extract energy from alternative energy sources, such as wind energy or wave energy. Both wave energy and wind energy are unpredictable and will in general be fairly concurrent with each other.

Further, wave energy extraction devices and other sea surface oriented devices will in most cases require a dynamic cable connection to the seabed to locate them and to allow energy to be transferred to the seabed and then to the shore. It is remarked that in the oil industry dynamic connections to the seabed are used, for example to connect a floating platform to the bottom of the sea. However, the motion of these platforms is often already minimized by using semisubmersible floating structures to reduce wear and tear due to fatigue.

In contrast, the nature of most wave energy extraction devices is aimed at maximize movement to produce the most energy, which has the detrimental effect of increasing the fatigue on dynamic cable connections to the bottom of the sea. This results in shorter lifetimes and higher maintenance costs.

US1025929 discloses a wave motor comprising a screw having anchored supports for its ends, said screw being arranged to be operated upon by the movement of the waves of the ocean, and means for receiving motion therefrom. The wave motor comprises a screw shafting, a fixed support and floating supports for said shafting for holding the shafting within the waters of the sea, so that the waves will rotate the same, and means for receiving and transmitting movement therefrom.

US4843249 discloses a system for generating electrical power from sea waves employs a multiplicity of turbine units, preferably disposed in a generally V-shaped array. By properly positioning them with respect to the surface of the water and the direction of wave front progression, and in some instances by providing means for diverting the course to water flow, the turbine wheels are caused to rotate so as to drive associated generators and thereby to produce electric power.

Another alternative energy source is energy extracted from tidal flow. Tidal flow has the advantage of predictability and directionality, i.e. there are always two tides a day and in general tidal flows will flow in substantially the same direction. This in contrast to waves and wind, where the direction may continuously change.

WO2006063833 relates to a flow converter for energy production from a water flow, comprising a rotor (3) with a shaft (19), at least one blade (11) extending radial from the shaft and a mounting for a rotating mounting of the shaft of the rotor such that the rotor, including the at least one blade are arranged under a water surface. The at least one blade has an elastic embodiment. The blade can extend from the shaft in the form of a spiral. The water flow leads to deformations of the blades such that the rotor is made to rotate by the water flow.

WO2006059094 discloses an apparatus for the generation of electrical or mechanical energy from a flowing fluid, said apparatus comprising at least one blade of substantially helical configuration the blade consisting of a plurality of blade sections. In use, the action of the flowing fluid on the blade causes it to rotate around its axis, said rotational motion being used to generate said electrical or mechanical energy. Also disclosed is a helical blade wherein the pitch length and/or radii varies along the length of the helical blade profile.

US1461502 discloses a current-motor, comprising a plurality of supports carrying bearings, shafts journaled through said bearings and operatively connected, a power take-off device at one end of the series of shafts, and a conical rotor on each shaft equipped with spirally arranged blades, said rotors being of progressively increasing diameters.

A drawback of a tidal flow energy extraction device is that a dynamic cable connection is still required to anchor the device to the bottom of the sea. There is also a cable connection required to transport the energy from the device to an energy collection device, or energy distribution grid.

A further drawback of extracting energy from a tidal flow is that it is challenging to provide a tidal flow energy extraction device that is economically advantageous. Prior art energy extraction devices that extract energy from tidal flow are constructed as highly efficient devices having a relatively complex construction.

It is an object of the invention to provide a water flow energy extraction device lacking one or more of the above-mentioned drawbacks of prior art energy extraction devices, or at least to provide an alternative water flow energy extraction device.

The invention provides a water flow extraction device as claimed in claim 1.

The water flow energy extraction device according to the invention is configured to extract energy from a water flow, for example a tidal flow, by providing a string of rotors arranged in the water flow.

The advantage of the string of rotors arranged in the water flow is that a relatively large part of the string of rotors can be positioned close to the water surface, while at the same time the first end and the second end of the string of rotors are connected to the first anchor point and second anchor point, respectively, that are arranged at a stationary location, for example at the bottom of the sea. The stationary locations of the first and second anchor points facilitate the electric connection of the energy generator to downstream energy devices, such as an energy storage and/or energy collection unit. This arrangement does not require a dynamic connection, such as a dynamic power cable, which is subject to large movements in multiple directions.

The string of rotors may comprise one or more rotors that can be positioned at a suitable height in the water flow. Each of the rotors is constructed to rotate about its longitudinal axis when arranged in a flow, in particular a tidal flow.

The first anchor point and the second anchor point are preferably arranged on or close to the bottom of the sea during the extraction of energy. In other embodiments, the first anchor point and the second anchor point may be arranged at a stationary location spaced from the bottom of the sea. It is also possible that the height of the first anchor point and the second anchor point may be adapted during extraction of energy from a water flow. For example, the first anchor point and the second anchor point may be positioned at a predetermined distance from the water surface, or, for instance, halfway between the bottom of the sea and the water surface. Since the water surface height will change due to the tides, maintaining this position requires adaptation of the height of the first anchor point and the second anchor point during energy extraction from the water flow.

It is remarked that the water flow energy extraction device is suitable to be used in water flows, for example wide water flows such as tidal flows or river flows of larger rivers.

In an embodiment, the string of rotors comprises multiple rotors mechanically connected to each other to increase the energy that can be obtained from the water flow. This rotation of the string of rotors is transferred to the energy generator that is arranged at least at the first end of the string of rotors. It is also possible that an energy generator is provided at each of the two ends of the string of rotors.

In an embodiment, the multiple rotors are mechanically connected to each other by universal joints. A universal joint is a joint or coupling that facilitates tilting of the rotation axes of the individual rotors with respect to each other, while at the same time the rotors can transfer rotation to each other and therewith to the energy generator that converts the rotational energy of the rotation of the string of rotors into electric energy. The universal joints may have any suitable shape and size. Any other joint between the rotors that facilitates tilting of the rotors with respect to each other, while at the same time transferring rotation from one rotor to a next rotor may also be applied. In yet another embodiment, the longitudinal axes of the rotors may be mounted at fixed angles with respect to each other.

In an embodiment, a distance between the first anchor point and the second anchor point is smaller than a length of the string of rotors. The relatively long length of the string of rotors allows the string of rotors to form a loop or arch shape that can be placed at a desired location in the water flow. The shape of the string of rotors may change. This change in shape may be caused by the water flow.

In an embodiment, the string of rotors is provided with one or more buoyancy elements. These buoyancy elements can be used to control the height and/or shape of the string of rotors in a water flow. It is advantageous to position the string of rotors, in particular a middle part thereof, relatively close to the water surface, as the velocity of the water flow is relatively large at the water surface. By providing buoyancy elements at suitable locations, the string of rotors can be arranged at this desirable location.

The buoyancy elements may for example be formed by hollow shafts of the rotors. The hollow space in the rotors may be filled with air or another gas which will provide a certain buoyancy to the string of rotors.

The buoyancy elements may also be formed by float elements connected to the string of rotors. The float elements may be partly above the water surface, but may also be completely submerged in the sea. The buoyancy of the string of rotors may also be, at least partly, formed by the material of the string of rotors or other buoyancy elements.

In an embodiment, a degree of buoyancy of the one or more buoyancy elements is adaptable to adapt the buoyancy of the string of rotors. It may be desirable that the position and/or shape of the string of rotors is adapted to the actual water flow, for example the height of the water surface or the velocity of the water flow. To adapt the position and/or shape of the string of rotors to a particular water flow, the degree of buoyancy of the one or more buoyancy elements arranged at or in in the string of rotors may be adaptable.

For example, when the buoyancy elements are formed by hollow shafts of the rotors, the degree of buoyancy may be adapted by adapting a ratio between air and water present within the hollow space of the hollow shaft.

Correspondingly, the buoyancy of float elements may be adapted by changing a ratio between air and liquid in the float elements.

In an embodiment, the energy extraction device comprises a control device to control the buoyancy of the string of rotors. A control device may be provided to control the buoyancy of the one or more buoyancy elements, in particular to obtain a desired position and/or shape of the string of rotors in a water flow. This control of the degree of buoyancy may be automatically or be controlled by an operator.

In an embodiment, the buoyancy elements may be distributed over the length of the string of rotors. For example, one or more center buoyancy elements may be provided relatively close to a center location of the string of rotors, the center location being halfway between the first anchor point and the second anchor point, while side buoyancy elements may be provided relatively closer to the first anchor point and the second anchor point. By increasing the buoyancy of the center buoyancy elements with respect to the buoyancy of the side buoyancy elements, the shape of the string of rotors may be made more pointed. This pointed shape may for example be suitable to reach, with the center location of the string of rotors, to a higher height from the bottom surface. By increasing the buoyancy of the side buoyancy elements with respect to the buoyancy of the center buoyancy elements, the shape of the string of rotors may be made more rounded. This rounded shape may for example be suitable to bring a larger number of rotors close to the water surface. This rounded shape may for example be used when the water surface is relatively low to ensure that the rotors will be kept completely submerged in the water.

In an embodiment, the one or more rotors are Darius rotors. A Darius rotor is a rotor configured to create rotational motion when a flow, for example a wind flow or water flow, flows across the Darius rotor. The Darius rotor comprises a number of straight or curved aerofoil blades mounted on a rotating shaft. The Darius rotor is often used in a vertical alignment, i.e. a longitudinal axis of the rotor extends in vertical direction, but the Darius rotor can also be used in other orientations. It will be clear that in the device of the present invention, the orientation of the longitudinal axis of the respective Darius rotor will depend on the position of the string of rotors in the water flow, and the location of the Darius rotor within the string of rotors. Any other suitable type of rotor may also be used.

In an embodiment, the first anchor point and the second anchor point each comprise a linear guide fixed to the bottom of the sea and extending in substantially vertical direction, and a connection element connected to a respective end of the string of rotors, wherein the connection element is movable with respect to the linear guide between a first position where the connection element is positioned relatively close to the bottom of the sea and a second position where the connection element is positioned relatively close to the water surface.

The first anchor point and the second anchor point are provided at a stationary location. However, it may be useful to adapt the vertical position of the first anchor point and the second anchor point. For example, when maintenance to the string of rotors is needed, it is advantageous to move the first anchor point and the second anchor point, at least partly, close to the water surface, or even above it, so that the whole string of rotors is accessible from the water surface. This may also allow easy installation, maintenance and/or repair of the energy generator provided in the first anchor point.

To move the first anchor point and the second anchor point at least partly to the water surface, the first anchor point and the second anchor point may each comprise a linear guide fixed to the bottom of the sea and extending in substantially vertical direction. The end of the string of rotors may be connected to a connection element which is movable with respect to the linear guide between a first position where the connection element is positioned relatively close to the bottom of the sea and a second position where the connection element is positioned relatively close to the water surface.

Such construction also allows to adapt the height of the first end and the second end of the string of rotors in order to position the string of rotors at a desired position in the water flow.

In other embodiments, the first anchor point and the second anchor point, and in particular the connection to the string of rotors, may be arranged at a fixed location, for example on the bottom of the sea.

In an embodiment, the water flow energy extraction device comprises a third anchor point mounted on the bottom of the sea, and a second string of rotors, wherein one end of the second string of rotors is connected to the first anchor point and a second end of the second string of rotors is connected to the third anchor point, wherein the energy generator is operatively connected to the second string of rotors, such that the energy generator will generate electrical energy from rotation of the second string of rotors.

The provision of a second string of rotors arranged between a third anchor point and the first anchor point, increases the amount of energy that can be collected in a single energy generator. The third anchor point is preferably provided at a side of the first anchor point opposite to the second anchor point. This arrangement of the third anchor point and the second string of rotors results in a more balanced load on the first anchor point, as the string of rotors and the second string of rotors are arranged at opposite sides of the first anchor point.

The second string of rotors may be constructed the same or substantially the same as the first string of rotors.

It is remarked that the first string of rotors and/or the second string of rotors may be connected to intermediate anchor points arranged between the first anchor point and the second or third anchor point, respectively, such that the respective string of rotors may form multiple arches, each arch comprising one or more rotors. The arches are interconnected such that the rotational energy of the rotors can be transferred to the energy generator.

The invention further provides a water flow energy extraction system, comprising: multiple water flow energy extraction devices as claimed in any of the claims 1-9, and an energy collection system electrically connected to the energy generator of each of the multiple water flow energy extraction devices.

The energy extraction devices of the invention are in particular suitable to be placed with multiple devices in a same area in the sea. The underlying philosophy is using a larger quantity of devices instead of increasing efficiency of a single device to increase energy that is collected by such system. Proportionately these systems will be cheaper to install, easier to maintain and more accessible for general use.

In an embodiment, the energy collection system comprises an energy storage to store energy generated by the energy generators.

The invention further provides a method to extract energy from a water flow, for example a tidal flow, using a water flow extraction device as claimed in any of the claims 1-9, comprising:
arranging one or more rotors in a water flow, and
extracting energy from the water flow by rotation of the one or more rotors.

In an embodiment, the string of rotors is provided with one or more buoyancy elements, wherein a degree of buoyancy of the one or more buoyancy elements is adaptable to adapt the buoyancy of the string of rotors, wherein the method comprises the step of controlling the buoyancy of the string of rotors to adapt a position of the string of rotors in the water flow.

In an embodiment, the degree of buoyancy of the one or more buoyancy elements is adapted to position a highest part of the string of rotors in an upper zone of the tidal wave, preferably close to the water surface.

In an embodiment, the first anchor point and second anchor point each comprise a linear guide fixed to the bottom of the sea and extending in substantially vertical direction, and a connection element connected to a respective end of the string of rotors, wherein the connection element is movable with respect to the linear guide between a first position where the connection element is positioned relatively close to the bottom of the sea and a second position where the connection element is positioned relatively close to the water surface, wherein the connection elements are arranged in the first position or between the first position and the second position during the step of extracting energy from the water flow, and wherein the connection elements are arranged in the second position during installation, maintenance or repair of the string of rotors and/or the connection elements.

Further characteristics and advantages of the energy extraction device of the invention will now be explained by description of an embodiment of the invention, whereby reference is made to the appended drawings, in which:
Figure 1 shows an embodiment of an energy extraction device according to the invention;
Figure 2 shows a detail of the embodiment of Figure 1;
Figure 3 shows the embodiment of the energy extraction device of Figure 1 in a maintenance state;
Figure 4 shows an alternative embodiment of an energy extraction device according to the invention
Figure 5 shows an embodiment of an energy extraction system according to the invention; and
Figure 6 shows an alternative embodiment of an energy extraction system according to the invention.

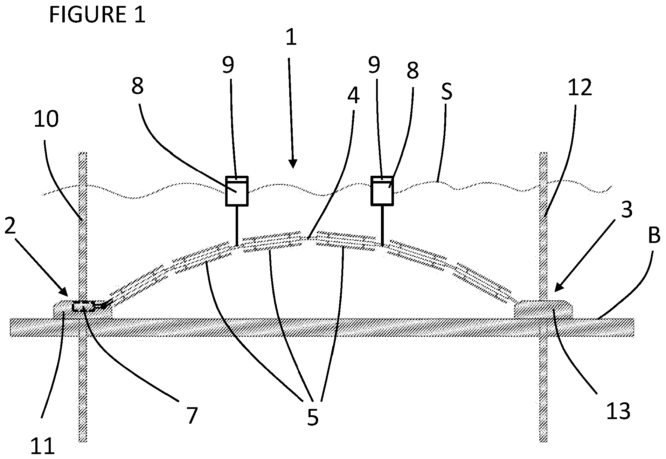

Figure 1 shows an embodiment of a water flow energy extraction device according to the invention, generally denoted by reference numeral 1. The water flow energy extraction device 1 comprises a first anchor point 2, a second anchor point 3 and a string of rotors 4. The first anchor point 2 and the second anchor point 3 are arranged at a stationary location on the bottom of the sea B. The string of rotors 4 comprises multiple rotors 5 that are mechanically connected to each other. A first end of the string of rotors 4 is connected to the first anchor point 2 and a second end of the string of rotors 4 is connected to the second anchor point 3.

The rotors 5 are constructed to rotate when arranged in a tidal flow. This means that when the string of rotors is arranged in a tidal flow, this will result in rotation of the rotors 5. The rotors 5 are for instance Darius devices such as depicted in Figure 1.

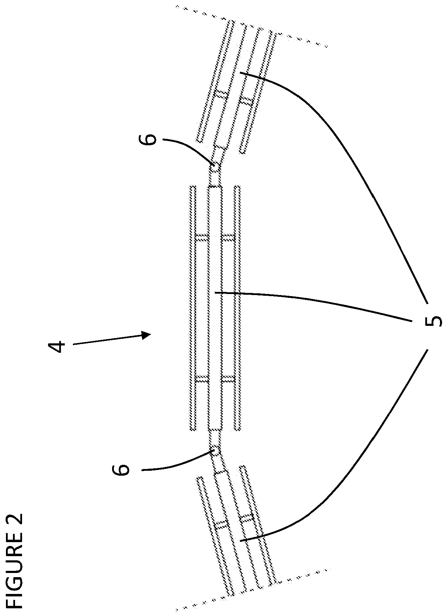

Figure 2 shows a detail of the rotors 5 of Figure 1. The rotors 5 are connected to each other by universal joints 6 that are configured to facilitate tilting of the rotors 5 with respect to each other, while being capable of transferring rotational movement about the respective longitudinal axes from one rotor 5 to an adjacent rotor 5. Each of the rotors 5 will rotate when tidal flow flows across the string of rotors 4 about its longitudinal axis. As a result, the string of rotors 4 will rotate, whereby rotation of the rotors 5 will be passed to the other rotors 5.

As shown in Figure 1, an energy generator 7 is arranged in the first anchor point 2. The energy generator 7 is mechanically connected to the first end of the string of rotors 4 such that rotation of the string of rotors 4 can be used to generate electric energy in the energy generator 7. The energy generator 7 may be electrically connected to an energy collection system arranged to collect, store and/or distribute the electrical energy extracted by the water flow energy extraction device 1 from the tidal flow.

It is desirable that the string of rotors 4 is advantageously positioned in the tidal flow to optimize the amount of energy that may be extracted from the tidal flow. It is therefore, desirable that the rotors 5 of the string of rotors 4 are arranged relatively close to the water surface, in this example sea surface S, where the velocity of the tidal flow is relatively high. Therefore, the length of the string of rotors 4 is larger than the distance between the first anchor point 2 and the second anchor point 3. This allows that the shape of the string of rotors can adapt or be adapted to a desired configuration, such as a loop or arch. The position and/or shape of the string of rotors 4 may be influenced by a number of buoyancy elements that provide a degree of buoyancy to the string of rotors 4.

In Figure 1, two float elements 8 that float at the sea surface S are provided. Two lines connect the string of rotors 4 to the float elements 8. The float elements 8 hold the string of rotors 4 at a certain distance below the sea surface S. In another embodiment, the float elements 8 may be submerged.

In addition to the float elements 8 or in an alternative embodiment, the buoyancy elements that provide a degree of buoyancy to the string of rotors 4 are formed by hollow shafts of the rotors 5. The hollow space within these hollow shafts may be filled, at least partly, with air or another gas to increase the buoyancy of the string of rotors 4. The buoyancy of the string of rotors 4 may also be provided by other buoyancy elements that increase the degree of buoyancy of the string of rotors 4, such as materials lighter than water.

The degree of buoyancy of the one or more buoyancy elements may be adaptable to adapt the buoyancy of the string of rotors 4. In the embodiment shown in Figure 1, a control device 9 is provided on each of the float elements 8 to adapt the buoyancy of the float elements 8 when desired. The degree of buoyancy of the float elements 8 may be adapted by changing the ratio between water and air within the float element 8. When the buoyancy of the float element 9 should be increased the control device 9 will replace water by air and when the buoyancy of the float element 8 should be decreased the control device 9 will replace air by water in the float element 8.

The adaptation of the degree of buoyancy of the buoyancy elements, such as the float elements 8, may change the position or shape of the string of rotors 4. Thus by adapting the degree of buoyancy of the buoyancy elements, the position and/or shape of the string of rotors 4 may be optimized for a particular tidal flow, for example with respect to water depth and/or velocity of the tidal flow.

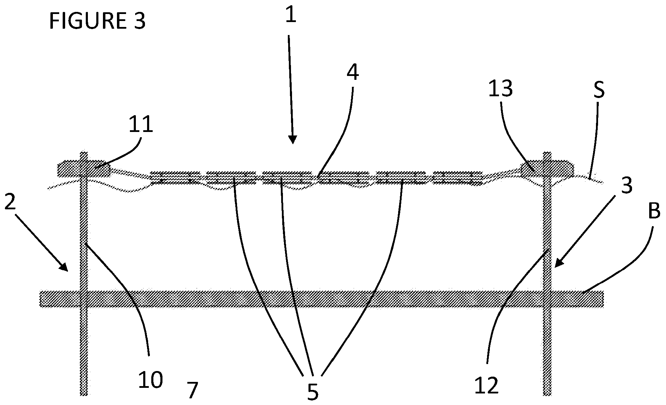

The first anchor point 2 comprises a first linear guide 10 fixed to the bottom of the sea B. The first linear guide 10 extends in a substantially vertical direction. A first connection element 11 is provided on the first linear guide 10. The first connection element 11 supports the energy generator 7. The first connection element 11 is movable with respect to the first linear guide 11 between a first position where the first connection element 11 is positioned relatively close to the bottom of the sea B (Figure 1) and a second position where the first connection element 11 is positioned relatively close to the sea surface S (Figure 3).

Correspondingly, the second anchor point 3 comprises a second linear guide 12 fixed to the bottom of the sea B. The second linear guide 12 also extends in substantially vertical direction. A second connection element 13 is provided on the second linear guide 12. The second connection element 13 is movable with respect to the second linear guide 12 between a first position where the second connection element 13 is positioned relatively close to the bottom of the sea B (Figure 1) and a second position where the second connection element 13 is positioned relatively close to the sea surface S (Figure 3).

The first end of the string of rotors 4 is connected to the first connection element 11 and the second end of the string of rotors 4 is connected to the second connection element 13. Movement of the first connection element 11 and the second connection element 13 along the first linear guide 10 and the second linear guide 12, respectively, can be used to position the first end and the second end of the string of rotors 4 in a desired position.

In Figure 1 the first connection element 11 and the second connection element 13 are arranged in the first position close to the bottom of the sea B. This first position may typically be used during extraction of energy from a tidal flow. The string of rotors may advantageously be positioned in the tidal flow forming an arch, whereby a top part of the arch, i.e. the middle part of the string of rotors 4, is positioned relatively close to the sea surface S. It may also be advantageous to position the first connection element 11 and the second connection element 13 at a higher position, between the first position and the second position, to position the string of rotors 4 in a more suitable position for energy extraction, for example closer to the sea surface S.

The position of the first connection element 11 and the second connection element 13 during energy extraction may for example be dependent on the height of the sea surface and/or the speed of the tidal flow. The position of the first connection element 11 and the second connection element 13 may be adapted during the process of energy extraction, for example to maintain the string of rotors 4 at a predetermined distance from the sea surface S.

Figure 3 shows the water flow energy extraction device 1 in which the first connection element 11 and the second connection element 13 are positioned in the second position close to the sea surface S. In this example the first connection element 11 and the second connection element 13 are positioned in the second position just above the sea surface S. It is remarked that the float elements 8 are not shown in Figure 3.

Since the buoyant string of rotors 4 is not pulled downwards into the sea by the first connection element 11 and the second connection element 13, the complete string of rotors 4 floats on the sea surface S. This allows easy installation, maintenance and/or repair of the string of rotors 4, but also of the energy generator 7 supported by the first connection element 11. This position of the first connection element 11 and the second connection element 13 also facilitates relatively easy mounting and dismounting of the string of rotors 4 on and from the first connection element 11 and the second connection element 13.

The string of rotors 4 may be assembled at a location remote from the first anchor point 2 and the second anchor point 3, for example onshore. Thereafter the string of rotors 4 may be transported to the location of the anchor points 2, 3, where one end of the string of rotors 4 is connected to the first connection element 11 and the other end of the string of rotors 4 is connected to the second connection element 13. It will be clear that it will be advantageous to position the first connection element 11 and the second connection element 13 in the second position close to the sea surface to mount the string of rotors 4 to the first connection element 11, in particular to the energy generator 7, and to the second connection element 13.

In the water flow energy extraction device of Figures 1 and 3, one string of rotors 4 is provided between a first anchor point 2 and a second anchor point 3. In another embodiment the water flow energy extraction device 1 may comprise a third anchor point and a second string of rotors. The third anchor point and the second string of rotors may be provided at a side of the first anchor point opposite to the second anchor point, and one end of the second string of rotors may be connected to the energy generator supported by the first connection element 11, such that rotation of both the first string of rotors 4 and the second string of rotors is converted by the energy generator 7 into electrical energy. The third anchor point and the second string of rotors may be constructed the same or substantially the same as the second anchor point 3 and the first string of rotors 4.

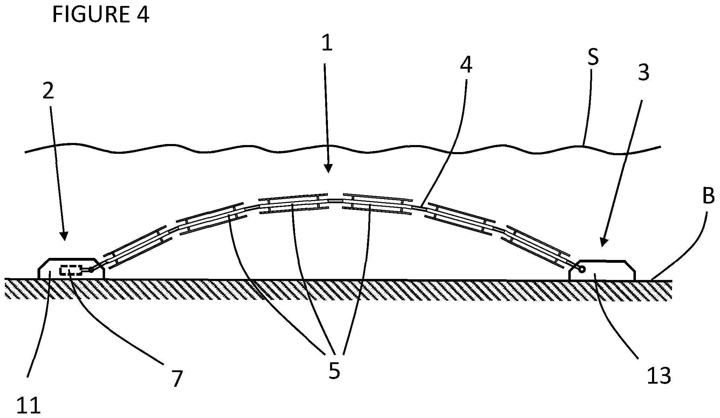

Figure 4 shows a second embodiment of a water flow energy extraction device 1. The water flow energy extraction device 1 comprises a first anchor point 2, a second anchor point 3 and a string of rotors 4 comprising multiple mechanically interlinked rotors 5. The first anchor point 2 and the second anchor point 3 are arranged at a stationary location on the bottom of the sea B. The string of rotors 4 is provided between the first anchor point 2 and the second anchor point 3.

An energy generator 7 is arranged in the first anchor point 2. The energy generator 7 is mechanically connected to the first end of the string of rotors 4 such that rotation of the string of rotors 4 can be used to generate electric energy in the energy generator 7. The string of rotors 4 may function the same as the string of rotors 4 of the embodiment of Figure 1. A number of buoyancy elements is arranged in the string of rotors 4 to provide a degree of buoyancy to the string of rotors 4.

The first anchor point 2 comprises a first connection element 11 supporting the energy generator 7. The second end of the string of rotors 4 is connected to the second connection element 13 of the second anchor point 3. The first connection element 11 and the second connection element 13 are mounted at a fixed position at the bottom of the sea B. This direct fixation of the first connection element 11 and the second connection element 13 on the bottom of the sea B allows a more simple construction of the water flow energy extraction device 1. But installation, maintenance and/or repair of the energy generator 7, the first connection element 11 and the second connection element 13, and at least a part of the string of rotors 4 has to be carried out below sea level.

The embodiment of Figure 4 may be in particular suitable at locations where the arrangement of linear guides from the bottom of the sea to the sea surface are not possible or not practical, for example at locations where the water depth is relatively large.

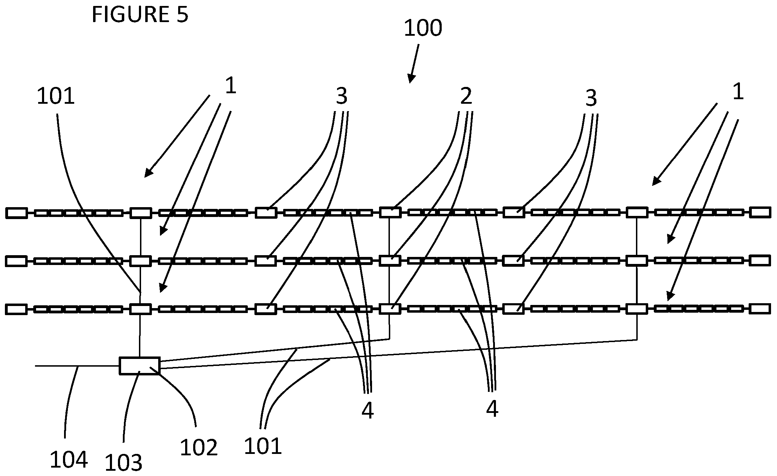

Figure 5 shows a top view of an embodiment of a water flow energy extraction system 100 comprising multiple energy extraction devices 1. The water flow energy extraction system 100 shown in Figure 5 comprises three rows of three energy extraction devices 1, whereby each energy extraction device 1 comprises two strings of rotors 4 arranged at opposite sides of the first anchor point 2. It is remarked that the second anchor point 3 of an energy extraction device 1 may also be used as third anchor point for a second string of rotors 4 of an adjacent energy extraction device 1 to form a continuous row of energy extraction devices 1. In another embodiment, the energy extraction devices 1 may be spaced from each other.

In other embodiments, the water flow energy extraction system may comprise any other desired number of energy extraction devices 1 arranged in one or more rows.

The energy generators of the energy extraction devices 1 are connected by electric cables 101 to an energy collection system 102. The energy collection system 102 may comprise an energy storage 103 to store electrical energy generated by the energy generators 7. A main cable 104 is provided to transport the energy to a further location, for example to the energy distribution grid.

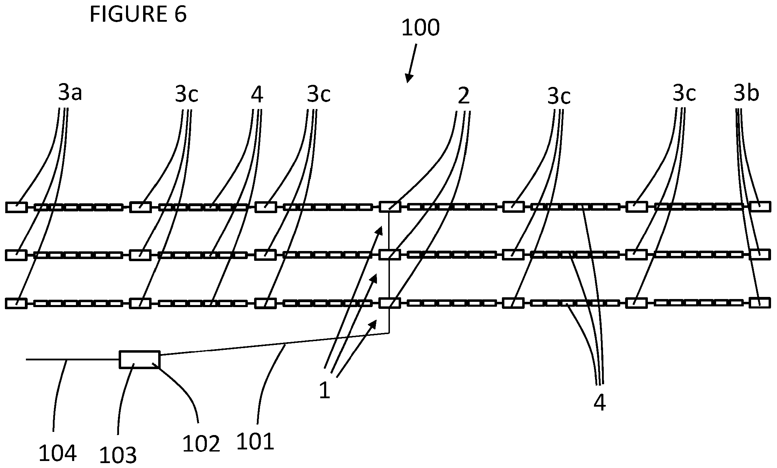

Figure 6 shows a top view of an alternative embodiment of a water flow energy extraction system 100 comprising multiple energy extraction devices 1. The water flow energy extraction system 100 shown in Figure 5 comprises three rows of energy extraction devices 1, whereby each row comprises one energy extraction device 1. The energy extraction device 1 of each row comprises two strings of rotors 4 arranged at opposite sides of the first anchor point 2. The opposite end of the string of rotors 4 is connected to a second anchor point 3a or a third anchor point 3b.

Intermediate anchor points 3c are provided between the first anchor point 2 and the second anchor point 3a or between the first anchor point 2 and the third anchor point 3b, respectively. The intermediate anchor points 2c provide intermediate anchor points at stationary locations that typically subdivide the respective string of rotors 4 in multiple, in this example three, arches. The shape and/or location of each of the arches may be adjusted by using buoyancy elements as explained hereinabove with respect to a string of rotors forming a single arch.

At the intermediate anchor points 3c the string of rotors 4 is held at a stationary location, but at the same time is allowed to rotate in order to transfer the rotational energy of the rotors 4 to the energy generator arranged in the first anchor point 2. The advantage of the intermediate anchor points 3c is that a relatively long string of rotors 4 may be used in combination with an energy generator, while at the same time the shape and location of the string of rotors 4, and its individual arches, can be controlled efficiently within a relatively small space.

The energy generators of the energy extraction devices 1 are connected by electric cables 101 to an energy collection system 102. The energy collection system 102 may comprise an energy storage 103 to store electrical energy generated by the energy generators 7. A main cable 104 is provided to transport the energy to a further location, for example to the energy distribution grid.

## Claims

1. Water flow energy extraction device (1), comprising:
one or more rotors (5) constructed to rotate when arranged in a water flow,
an energy generator (7) connected to the one or more rotors (5),
**characterized in that** the one or more rotors (5) are provided as a string of rotors (4) having a first end and a second end, wherein the first end is connected to a first anchor point (2) and the second end is connected to a second anchor point (3), wherein the first anchor point (2) and
the second anchor point (3) are mounted on the bottom of the sea (B), and wherein the energy generator (7) is arranged in the first anchor point (2), and **in that** the energy generator (7) is operatively connected to the string of rotors (4), such that the energy generator (7) will generate electrical energy from rotation of the string of rotors (4),
wherein a distance between the first anchor point (2) and the second anchor point (3) is smaller than a length of the string of rotors (4).

2. Water flow energy extraction device as claimed in claim 1, wherein the string of rotors (4) comprises multiple rotors (5) mechanically connected to each other.

3. Water flow energy extraction device as claimed in claim 2, wherein the multiple rotors (5) are mechanically connected to each other by universal joints (6).

4. Water flow energy extraction device as claimed in any of the preceding claims, wherein the string of rotors (4) is provided with one or more buoyancy elements (5, 8).

5. Water flow energy extraction device as claimed in claim 4, wherein a degree of buoyancy of the one or more buoyancy elements (5, 8) is adaptable to adapt the buoyancy of the string of rotors (4).

6. Water flow energy extraction device as claimed in claim 5, wherein the energy extraction device (1) comprises a control device to control the buoyancy of the string of rotors (4).

7. Water flow energy extraction device as claimed in any of the preceding claims, wherein the one or more rotors (5) are Darius rotors.

8. Water flow energy extraction device as claimed in any of the preceding claims, wherein the first anchor point (2) and second anchor point (3) each comprise a linear guide (10, 12) fixed to the bottom of the sea (B) and extending in substantially vertical direction, and a connection element (11, 13) connected to a respective end of the string of rotors (4), wherein the connection element (11, 13) is movable with respect to the linear guide (10, 12) between a first position where the connection element (11, 13) is positioned relatively close to the bottom of the sea (B) and a second position where the connection element (11, 13) is positioned relatively close to the water surface (S).

9. Water flow energy extraction device as claimed in any of the preceding claims, wherein the water flow energy extraction device (1) comprises a third anchor point mounted on the bottom of the sea (B), and a second string of rotors, wherein one end of the second string of rotors is connected to the first anchor point (2) and a second end of the second string of rotors is connected to the third anchor point, wherein the energy generator (7) is operatively connected to the second string of rotors, such that the energy generator will generate electrical energy from rotation of the second string of rotors.

10. Water flow energy extraction system, comprising:
multiple water flow energy extraction devices (1) as claimed in any of the preceding claims, and
an energy collection system (102) electrically connected to the energy generator (7) of each of the multiple water flow energy extraction devices (1).

11. Water flow energy extraction system according to claim 10, wherein the energy collection system (102) comprises an energy storage (103) to store energy generated by the energy generators (7).

12. Method to extract energy from a water flow, for example a tidal flow, using a water flow extraction device (1) as claimed in any of the claims 1-9, comprising:
arranging one or more rotors (5) in a water flow, and
extracting energy from the water flow by rotation of the one or more rotors (5).

13. Method as claimed in claim 12, wherein the string of rotors (4) is provided with one or more buoyancy elements (5, 8), wherein a degree of buoyancy of the one or more buoyancy elements (5, 8) is adaptable to adapt the buoyancy of the string of rotors (4), wherein the method comprises the step of controlling the buoyancy of the string of rotors (4) to adapt a position of the string of rotors (4) in the water flow.

14. Method as claimed in claim 13, wherein the degree of buoyancy of the one or more buoyancy elements (5, 8) is adapted to position a highest part of the string of rotors (4) in an upper zone of the tidal wave, preferably close to the water surface (S).

15. Method as claimed in any of the claims 12 to 14, wherein the first anchor point (2) and second anchor point (3) each comprise a linear guide (10, 12) fixed to the bottom of the sea (B) and extending in substantially vertical direction, and a connection element (11, 13) connected to a respective end of the string of rotors (4), wherein the connection element is movable with respect to the linear guide between a first position where the connection element (11, 13) is positioned relatively close to the bottom of the sea (B) and a second position where the connection element (11, 13) is positioned relatively close to the water surface (S),
wherein the connection elements (11, 13) are arranged in the first position during the step of extracting energy from the water flow, and
wherein the connection elements (11, 13) are arranged in the second position during installation, maintenance and/or repair of the string of rotors (4) and/or the connection elements (11, 13).

## Patentansprüche

1. Wasserflussenergie-Extraktionsvorrichtung (1), umfassend:
einen oder mehrere Rotoren (5), die dazu konstruiert sind, sich zu drehen, wenn sie in einem Wasserfluss angeordnet sind,
einen Energiegenerator (7), der mit dem einen oder den mehreren Rotoren (5) verbunden ist,
**dadurch gekennzeichnet, dass** der eine oder die mehreren Rotoren (5) als eine Rotorkette (4) mit einem ersten Ende und einem zweiten Ende vorgesehen sind, wobei das erste Ende mit einem ersten Ankerpunkt (2) und das zweite Ende mit einem zweiten Ankerpunkt (3) verbunden ist, wobei der erste Ankerpunkt (2) und der zweite Ankerpunkt (3) am Meeresboden (B) montiert sind, und wobei der Energiegenerator (7) im ersten Ankerpunkt (2) angeordnet ist, und dadurch, dass der Energiegenerator (7) so mit der Rotorkette (4) wirkverbunden ist, dass der Energiegenerator (7) aus der Rotation der Rotorkette (4) elektrische Energie erzeugt,
wobei ein Abstand zwischen dem ersten Ankerpunkt (2) und dem zweiten Ankerpunkt (3) kleiner als eine Länge der Rotorkette (4) ist.

2. Wasserflussenergie-Extraktionsvorrichtung nach Anspruch 1, wobei die Rotorkette (4) mehrere Rotoren (5) umfasst, die mechanisch miteinander verbunden sind.

3. Wasserflussenergie-Extraktionsvorrichtung nach Anspruch 2, wobei die mehreren Rotoren (5) durch Kardangelenke (6) mechanisch miteinander verbunden sind.

4. Wasserflussenergie-Extraktionsvorrichtung nach einem der vorhergehenden Ansprüche, wobei die Rotorkette (4) mit einem oder mehreren Auftriebselementen (5, 8) versehen ist.

5. Wasserflussenergie-Extraktionsvorrichtung nach Anspruch 4, wobei ein Auftriebsgrad des einen oder der mehreren Auftriebselemente (5, 8) anpassbar ist, um den Auftrieb der Rotorkette (4) anzupassen.

6. Wasserflussenergie-Extraktionsvorrichtung nach Anspruch 5, wobei die Energieextraktionsvorrichtung (1) eine Steuervorrichtung umfasst, um den Auftrieb der Rotorkette (4) zu steuern.

7. Wasserflussenergie-Extraktionsvorrichtung nach einem der vorhergehenden Ansprüche, wobei der eine oder die mehreren Rotoren (5) Darrieus-Rotoren sind.

8. Wasserflussenergie-Extraktionsvorrichtung nach einem der vorhergehenden Ansprüche, wobei der erste Ankerpunkt (2) und der zweite Ankerpunkt (3) jeweils eine am Meeresboden (B) befestigte und sich im Wesentlichen in vertikaler Richtung erstreckende Linearführung (10, 12) und ein mit einem jeweiligen Ende der Rotorkette (4) verbundenes Verbindungselement (11, 13) umfassen, wobei das Verbindungselement (11, 13) in Bezug auf die Linearführung (10, 12) zwischen einer ersten Position, in der das Verbindungselement (11, 13) relativ nahe am Meeresboden (B) positioniert ist, und einer zweiten Position, in der das Verbindungselement (11, 13) relativ nahe an der Wasseroberfläche (S) positioniert ist, bewegbar ist.

9. Wasserflussenergie-Extraktionsvorrichtung nach einem der vorhergehenden Ansprüche, wobei die Wasserflussenergie-Extraktionsvorrichtung (1) einen am Meeresboden (B) montierten dritten Ankerpunkt und eine zweite Rotorkette umfasst, wobei ein Ende der zweiten Rotorkette mit dem ersten Ankerpunkt (2) und ein zweites Ende der zweiten Rotorkette mit dem dritten Ankerpunkt verbunden ist, wobei der Energiegenerator (7) so mit der zweiten Rotorkette wirkverbunden ist, dass der Energiegenerator aus der Rotation der zweiten Rotorkette elektrische Energie erzeugt.

10. Wasserflussenergie-Extraktionssystem, umfassend:
mehrere Wasserflussenergie-Extraktionsvorrichtungen (1) nach einem der vorhergehenden Ansprüche, und
ein Energiesammelsystem (102), das elektrisch mit dem Energiegenerator (7) jeder der mehreren Wasserflussenergie-Extraktionsvorrichtungen (1) verbunden ist.

11. Wasserflussenergie-Extraktionssystem nach Anspruch 10, wobei das Energiesammelsystem (102) einen Energiespeicher (103) umfasst, um durch die Energiegeneratoren (7) erzeugte Energie zu speichern.

12. Verfahren zur Gewinnung von Energie aus einem Wasserfluss, beispielsweise einem Gezeitenfluss, unter Verwendung einer Wasserflussenergie-Extraktionsvorrichtung (1) nach einem der Ansprüche 1-9, umfassend:
Anordnen eines oder mehrerer Rotoren (5) in einem Wasserfluss, und
Gewinnen von Energie aus dem Wasserfluss durch Rotation des einen oder der mehreren Rotoren (5).

13. Verfahren nach Anspruch 12, wobei die Rotorkette (4) mit einem oder mehreren Auftriebselementen (5, 8) versehen ist, wobei ein Auftriebsgrad des einen oder der mehreren Auftriebselemente (5, 8) anpassbar ist, um den Auftrieb der Rotorkette (4) anzupassen, wobei das Verfahren den Schritt des Steuerns des Auftriebs der Rotorkette (4) umfasst, um eine Position der Rotorkette (4) im Wasserfluss anzupassen.

14. Verfahren nach Anspruch 13, wobei der Auftriebsgrad des einen oder der mehreren Auftriebselemente (5, 8) angepasst wird, um einen höchsten Teil der Rotorkette (4) in einer oberen Zone der Gezeitenwelle, vorzugsweise nahe der Wasseroberfläche (S), zu positionieren.

15. Verfahren nach einem der Ansprüche 12 bis 14, wobei der erste Ankerpunkt (2) und der zweite Ankerpunkt (3) jeweils eine am Meeresboden (B) befestigte und sich im Wesentlichen in vertikaler Richtung erstreckende Linearführung (10, 12) und ein mit einem jeweiligen Ende der Rotorkette (4) verbundenes Verbindungselement (11, 13) umfassen, wobei das Verbindungselement in Bezug auf die Linearführung zwischen einer ersten Position, in der das Verbindungselement (11, 13) relativ nahe am Meeresboden (B) positioniert ist, und einer zweiten Position, in der das Verbindungselement (11, 13) relativ nahe an der Wasseroberfläche (S) positioniert ist, bewegbar ist,
wobei die Verbindungselemente (11, 13) während des Schritts der Energiegewinnung aus dem Wasserfluss in der ersten Position angeordnet sind, und
wobei die Verbindungselemente (11, 13) während der Installation, Wartung und/oder Reparatur der Rotorkette (4) und/oder der Verbindungselemente (11, 13) in der zweiten Position angeordnet sind.

## Revendications

1. Dispositif d'extraction d'énergie des flux d'eau (1) comprenant :
un ou plusieurs rotors (5) construits pour tourner lorsqu'ils sont agencés dans un flux d'eau,
un générateur d'énergie (7) relié au ou aux rotors (5),
**caractérisé en ce que** le ou les rotors (5) sont disposés en une chaîne de rotors (4) ayant une première extrémité et une seconde extrémité, la première extrémité étant reliée à un premier point d'ancrage (2) et la seconde extrémité étant reliée à un deuxième point d'ancrage (3), le premier point d'ancrage (2) et le deuxième point d'ancrage (3) étant montés sur le fond de la mer (B), et le générateur d'énergie (7) étant agencé dans le premier point d'ancrage (2), et le générateur d'énergie (7) étant relié de manière fonctionnelle à la chaîne de rotors (4) de telle sorte que le générateur d'énergie (7) génère de l'énergie électrique à partir de la rotation de la chaîne de rotors (4),
une distance entre le premier point d'ancrage (2) et le deuxième point d'ancrage (3) étant plus petite que la longueur de la chaîne de rotors (4).

2. Dispositif d'extraction d'énergie des flux d'eau selon la revendication 1, la chaîne de rotors (4) comprenant de multiples rotors (5) reliés mécaniquement les uns aux autres.

3. Dispositif d'extraction d'énergie des flux d'eau selon la revendication 2, les multiples rotors (5) étant reliés mécaniquement les uns aux autres par des joints universels (6).

4. Dispositif d'extraction d'énergie des flux d'eau selon l'une quelconque des revendications précédentes, la chaîne de rotors (4) étant pourvue d'un ou plusieurs éléments de flottabilité (5, 8).

5. Dispositif d'extraction d'énergie des flux d'eau selon la revendication 4, un degré de flottabilité de l'élément ou des éléments de flottabilité (5, 8) étant adaptable pour adapter la flottabilité de la chaîne de rotors (4).

6. Dispositif d'extraction d'énergie des flux d'eau selon la revendication 5, le dispositif d'extraction d'énergie (1) comprenant un dispositif de commande pour commander la flottabilité de la chaîne de rotors (4).

7. Dispositif d'extraction d'énergie des flux d'eau selon l'une quelconque des revendications précédentes, le ou les rotors (5) étant des rotors de type Darrieus.

8. Dispositif d'extraction d'énergie des flux d'eau selon l'une quelconque des revendications précédentes, le premier point d'ancrage (2) et le deuxième point d'ancrage (3) comprenant chacun un guide linéaire (10, 12) fixé au fond de la mer (B) et s'étendant dans une direction sensiblement verticale, et un élément de liaison (11, 13) relié à une extrémité respective de la chaîne de rotors (4), l'élément de liaison (11, 13) étant mobile par rapport au guide linéaire (10, 12) entre une première position où l'élément de liaison (11, 13) est positionné relativement proche du fond de la mer (B) et une seconde position où l'élément de liaison (11, 13) est positionné relativement proche de la surface de l'eau (S).

9. Dispositif d'extraction d'énergie des flux d'eau selon l'une quelconque des revendications précédentes, le dispositif d'extraction d'énergie des flux d'eau (1) comprenant un troisième point d'ancrage monté sur le fond de la mer (B), et une seconde chaîne de rotors, une extrémité de la seconde chaîne de rotors étant reliée au premier point d'ancrage (2) et une seconde extrémité de la seconde chaîne de rotors étant reliée au troisième point d'ancrage, le générateur d'énergie (7) étant relié de manière fonctionnelle à la seconde chaîne de rotors, de telle sorte que le générateur d'énergie génère de l'énergie électrique à partir de la rotation de la seconde chaîne de rotors.

10. Système d'extraction d'énergie des flux d'eau, comprenant :
de multiples dispositifs d'extraction d'énergie des flux d'eau (1) selon l'une quelconque des revendications précédentes, et
un système de collecte d'énergie (102) connecté électriquement au générateur d'énergie (7) de chacun des multiples dispositifs d'extraction d'énergie des flux d'eau (1).

11. Système d'extraction d'énergie des flux d'eau selon la revendication 10, le système de collecte d'énergie (102) comprenant un stockage d'énergie (103) pour stocker l'énergie générée par les générateurs d'énergie (7).

12. Procédé pour extraire de l'énergie à partir d'un flux d'eau, par exemple un écoulement de marée, utilisant un dispositif d'extraction d'énergie des flux d'eau (1) selon l'une quelconque des revendications 1 à 9, comprenant :
l'agencement d'un ou plusieurs rotors (5) dans un flux d'eau, et
l'extraction d'énergie des flux d'eau par rotation du ou des rotors (5).

13. Procédé selon la revendication 12, la chaîne de rotors (4) étant pourvue d'un ou plusieurs éléments de flottabilité (5, 8), le degré de flottabilité de l'élément ou des éléments de flottabilité (5, 8) étant adaptable pour adapter la flottabilité de la chaîne de rotors (4), le procédé comprenant l'étape de commande de la flottabilité de la chaîne de rotors (4) pour adapter une position de la chaîne de rotors (4) dans les flux d'eau.

14. Procédé selon la revendication 13, le degré de flottabilité de l'élément ou des éléments de flottabilité (5, 8) étant adapté pour positionner une partie la plus haute de la chaîne de rotors (4) dans une zone supérieure de la vague de marée, de préférence proche de la surface de l'eau (S).

15. Procédé selon l'une quelconque des revendications 12 à 14, le premier point d'ancrage (2) et le deuxième point d'ancrage (3) comprenant chacun un guide linéaire (10, 12) fixé au fond de la mer (B) et s'étendant dans une direction sensiblement verticale, et un élément de liaison (11, 13) relié à une extrémité respective de la chaîne de rotors (4), l'élément de liaison étant mobile par rapport au guide linéaire entre une première position où l'élément de liaison (11, 13) est positionné relativement proche du fond de la mer (B) et une seconde position où l'élément de liaison (11, 13) est positionné relativement proche de la surface de l'eau (S),
les éléments de liaison (11, 13) étant agencés dans la première position pendant l'étape d'extraction d'énergie des flux d'eau, et
les éléments de liaison (11, 13) étant agencés dans la seconde position pendant l'installation, la maintenance et/ou la réparation de la chaîne de rotors (4) et/ou des éléments de liaison (11, 13).
